# EUROPÄISCHE PATENTSCHRIFT

(11) **EP 3 448 554 B1**
(45) Veröffentlichungstag und Bekanntmachung des Hinweises auf die Patenterteilung: **09.09.2020**
(21) Anmeldenummer: 16720083.1
(22) Anmeldetag: 25.04.2016
(51) Int. Cl.: B01J 20/02, B01J 20/32, B01J 20/30, B01J 20/28, B01J 20/20, B01J 23/745

(54) **KORROSIONSSTABILES REAKTIVES ADSORBENS ZUR BEHANDLUNG VON KONTAMINIERTEN WÄSSERN, VERFAHREN ZU SEINER HERSTELLUNG UND SEINE VERWENDUNG**
CORROSION-RESISTANT REACTIVE ADSORBENT FOR TREATING CONTAMINATED WATERS, METHOD FOR PRODUCING SAME, AND USE OF SAME
ADSORBANT RÉACTIF RÉSISTANT À LA CORROSION DESTINÉ AU TRAITEMENT D'EAUX CONTAMINÉES, SON PROCÉDÉ DE FABRICATION ET SON UTILISATION

(43) Veröffentlichungstag der Anmeldung: 06.03.2019
(73) Patentinhaber: Helmholtz-Zentrum für Umweltforschung GmbH - UFZ, 04318 Leipzig (DE)
(72) Erfinder: KOPINKE, Frank-Dieter, 04109 Leipzig (DE); MACKENZIE, Katrin, 04683 Naundorf (DE); VOGEL, Maria, 04317 Leipzig (DE); BLEYL, Steffen, 04155 Leipzig (DE); GEORGI, Anett, 04289 Leipzig (DE)
(74) Vertreter: Gulde & Partner
(86) Internationale Anmeldenummer: PCT/EP2016/059206
(87) Internationale Veröffentlichungsnummer: WO 2017/186264

(56) Entgegenhaltungen:
- DE-A1-102005 054 666
- US-A1- 2004 007 524

## Beschreibung

Die Erfindung betrifft ein korrosionsstabiles reaktives Adsorbens, welches sich aus elementarem Eisen in nanopartikulärer Form auf einem Kohlenstoffträger, Schwefel und weiterhin Phosphor zusammensetzt sowie ein Verfahren zur Herstellung dieses reaktiven Adsorbens und dessen Verwendung zur Entfernung von reduktiv abbaubaren Schadstoffen in kontaminierten Grund- und Abwässern.

### Stand der Technik

Metallisches Eisen ist als kostengünstiges und umweltfreundliches Reduktionsmittel für den chemischen Abbau von Wasserschadstoffen, insbesondere von chlorierten organischen Verbindungen, sogenannten CKW, bekannt und in der wissenschaftlichen wie Patentliteratur ausführlich beschrieben. Eine besondere Ausführungsform ist das nanopartikuläre Eisen, im angloamerikanischen Sprachraum als NZVI (nanoscale zero-valent iron) bezeichnet.

Die verschiedenen Anwendungsformen von elementarem Eisen (ZVI - zero-valent iron), einschließlich NZVI, besitzen sämtlich zwei immanente Nachteile: Sie sind praktisch inaktiv als Adsorbens für hydrophobe Schadstoffe wie CKW (Chlorkohlenwasserstoffe) und sie weisen nur eine relativ kurze Lebensdauer des ZVI in wässrigem Milieu auf, weil sie durch Reaktion mit Wasser und noch schneller mit gelöstem Sauerstoff (und ggf. anderen Elektronenakzeptoren, wie Nitrat) verbraucht werden, gemäß den Reaktionen 2 H₂O → Fe²⁺ + H₂ + 2 OH⁻ (anaerobe Korrosion) bzw. 4 Fe⁰ + 3 O₂ + 6 H₂O → 4 Fe³⁺ + 12 OH⁻ (aerobe Korrosion). Durch anaerobe und aerobe Korrosion gehen wertvolle Reduktionsäquivalente, die für den Schadstoffabbau benötigt werden, parasitär verloren.

Eine Zusammenfassung des Standes von Wissenschaft und Technik ergibt, dass ZVI und NZVI als Umweltreagenzien bereits ausführlich untersucht wurden. So sind neben Kompositmaterialien aus NZVI und kolloidaler Aktivkohle auch Modifizierungen der ZVI und NZVI durch entweder schwefelhaltige Zusätze oder durch phosphorhaltige Zusätze bekannt.

So beschreiben Mackenzie et al. und Bleyl et al. in einer Reihe von Veröffentlichungen ein Kompositmaterial aus NZVI und kolloidaler Aktivkohle, das als reaktives Adsorbens zur In-situ-Behandlung von kontaminierten Grundwässern geeignet ist. Die Autoren weisen ausdrücklich auf die pyrophoren Eigenschaften des thermochemisch erzeugten, frischen Kompositmaterials hin und beschreiben verschiedene Stabilisierungsmethoden, u.a. durch Behandlung mit Wasserdampf, Sauerstoff, Trimethylchlorsilan, H₂S, HCl und Azetylen - sämtlich über die Gasphase (S. Bleyl, K. Mackenzie, F.-D. Kopinke: Carbo-Iron - Synthesis and stabilization of a zero-valent iron-doped colloidal activated carbon for in-situ groundwater treatment. Chemical Engineering Journal 2012, 191, 588-595). Ziel dieser Behandlungen ist es, die pyrophoren Eigenschaften zu quenchen, ein luftstabiles, lagerfähiges Material zu erzeugen und dabei möglichst wenig vom aktiven Reduktionsmittel ZVI zu verlieren. Die meisten Stabilisierungsmethoden gehen jedoch zu Lasten des ZVI-Gehaltes. Durch Behandlung des frischen Kompositmaterials mit gasförmigem Chlorwasserstoff, konnte eine Stabilisierung des ZVI an Luft erreicht werden (K. Mackenzie, S. Bleyl, F.-D. Kopinke: Carbo-Iron - An Fe/AC composite - As alternative to nano-iron for groundwater treatment. Water Research 2012, 46, 3817-3826). Für den Fachmann ist erkennbar, dass diese Desaktivierungsmethode zur Bildung von Eisenchlorid an der ZVI-Oberfläche führt. Eisenchlorid ist wasserlöslich und kann damit zwar eine Stabilisierung an Luft bewirken, nicht jedoch in wässrigem Milieu.

Die Wirkung von schwefelhaltigen Zusätzen an ZVI beruht i.d.R. auf der Bildung von Fe-S-Verbindungen, die die Oberfläche der Eisenpartikel bedecken. Dies führt zu unterschiedlichen Auswirkungen auf die chemische Reaktivität des Materials (als Reduktionsmittel gegen CKW) und seine Korrosionsgeschwindigkeit. Eine Langzeitstabilisierung des ZVI konnte nicht nachgewiesen werden. So beschreiben z.B. Hansson et al. (E. B. Hansson, M. S. Odziemkowski, R. W. Gillham: Influence of Na2S on the degradation kinetics of CCl4 in the presence of very pure iron. J. Contaminant Hydrol. 2008, 98, 128-134) ein FeS-Coating von ZVI durch Behandlung mit Bisulfid (NaHS). Das FeS-Coating bewirkt anfänglich eine Passivierung des ZVI für alle Reaktionen, also Dechlorierung und Korrosion. Nach einigen Tagen setzt jedoch eine fortschreitende Korrosion der FeS-Hülle ein, verbunden mit einer Vergrößerung der spezifischen Oberfläche und einer Erhöhung der ZVI-Reaktivität. Die Dechlorierung von Tetrachlormethan liefert ausschließlich Chloroform, also das unerwünschte Produkt der unvollständigen Dechlorierung. Beide beschriebenen Auswirkungen der Schwefelbehandlung von ZVI sind nachteilig für einen In-situ Einsatz bei dem korrosionsstabile, reaktive Adsorbenzien für hydrophobe Schadstoffe wie CKW mit langer Lebensdauer wünschenswert sind.

Auch Turcio-Ortega et al. (D. Turcio-Ortega, D. Fan, P. G. Tratnyek, E.-J.Kim, Y.-S. Chang: Reactivity of Fe/FeS Nanoparticles: Electrolyte Composition Effects on Corrosion Electrochemistry. Environ. Sci. Technol. 2012, 46, 12484-12492) untersuchten die Auswirkungen einer Schwefelbehandlung auf Reaktivität und Korrosionsgeschwindigkeit von Fe/FeS- Nanopartikeln mit Hilfe elektrochemischer Methoden. Sie fanden überraschend heraus, dass Fe/FeS schneller korrodiert und empfindlicher auf die Zusammensetzung des umgebenden Wassers (z.B. Chloridkonzentration) reagiert, als unbehandeltes ZVI, das sich in wässrigem Milieu spontan mit einer Oxidschicht passiviert. Man kann davon ausgehen, dass das Einbringen von ZVI in einen Grundwasserleiter zu stark reduzierenden Bedingungen führt, in deren Folge eine mikrobielle Sulfatreduktion einsetzen kann. Dabei wird neben anderen Schwefelverbindungen als Hauptprodukt Sulfid gebildet. Auf diesem Weg erfolgt eine ,natürliche' Schwefelmodifizierung von ZVI, ausgelöst durch die mikrobielle Sulfatreduktion. Da diese Schwefelmodifizierung, wie von Hansson et al. (2008) und Turcio-Ortega et at. (2012) beschrieben, zu einer beschleunigten ZVI-Korrosion führt, sind geeignete Maßnahmen zur Stabilisierung von ZVI gerade bei einer In-situ-Anwendung dringend erforderlich.

Auch der Einfluss von Phosphorverbindungen auf Stabilität und Reaktivität von NZVI wurde in zwei wissenschaftlichen Publikationen von Lowry et al. (Y. Liu, T. Phenrat, G. V. Lowry: Effect of TCE Concentration and Dissolved Groundwater Solutes on NZVI-Promoted TCE Dechlorination and H2 Evolution. Environ. Sci. Technol. 2007, 41, 7881-7887.
B. Reinsch, B. Forsberg, R. Leepenn, C. Kim, G. V. Lowry: Chemical Transformations during Aging of Zerovalent Iron Nanoparticles in the Presence of Common Groundwater Dissolved Constituents. Environ. Sci. Technol. 2010, 44, 3455-3461) untersucht. Danach bewirken Phosphatzusätze jedoch eine Inhibierung der Dechlorierung von CKW, während die Stabilität des NZVI nicht signifikant verbessert werden konnte - also keinerlei Verbesserung der praktischen Nutzbarkeit von ZVI.

Weiterhin ist die Kombination von Eisen, Schwefel und Kohlenstoff zur Erzeugung von reaktiven Partikeln, die für den Abbau von Schadstoffen in Wässern geeignet sind, literaturbekannt. So kann z.B. der US-Anmeldung 20090191084 A1 (2009) ein ZVI-Material entnommen werden, das mit Graphit (>4 Ma%) und Schwefel (>0,5 Ma%) modifiziert wurde, um seine Reaktivität und Selektivität als Reagenz bei der Wasserreinigung zu verbessern. Unter Selektivitätsverbesserung wird hier eine Beeinflussung des Reaktionsmechanismus (vom direkten Elektronentransfer [Hydrogenolyse] zum H-Transfer: Beispiele: TCE und 1,1,1-TCA) verstanden, die auf einen möglichst geringen Anteil an unerwünschten, partiell dechlorierten Reaktionsprodukten beim Abbau der CKW zielt (z.B. möglichst wenig cis-Dichlorethen aus Trichlorethen). Unter Reaktivitätsverbesserung wird eine allgemeine Reaktivitätssteigerung ("to enhance corrosivity and reactivity of the iron") verstanden: Kohlenstoff und Schwefel wurden hinzugefügt, um Korrosion und Reaktivität (rate of contaminant reduction) des Eisens bei der Behandlung von großen Volumina Schmutzwasser, kontaminiertem Grundwasser und Oberflächenwasser zu erhöhen. D.h., die Modifizierung von ZVI soll eine allgemeine Reaktivitätserhöhung des Eisens bewirken, um mit möglichst hohem Durchsatz kontaminierte Wässer in konventionellen oberirdischen Reaktoren behandeln zu können.

In US 2004/007524 A1 wird ein an Aktivkohle gebundener Fe⁰-Katalysator zum Abbau von Halogenkohlenstoffen in kontaminierten Gewässern vorgeschlagen. Die Zusammensetzung kann neben dem Katalysator ferner anaerobe Mikroorganismen enthalten, die in Gegenwart von sulfathaltigen Verbindungen Kohlenwasserstoffe metabolisieren können. Eine Nährlösung für diese Mikroorganismen kann Phosphate enthalten.

Alle bekannten Maßnahmen führen also entweder zu einer schnellen Korrosion von Eisen, kaum verbesserten Stabilität oder zur Hemmung der Dechlorierung von CKW in Wässern.

Der vorliegenden Erfindung liegt daher die Aufgabe zu Grunde, ein korrosionsstabiles reaktives Agens bereitzustellen, das die beiden Nachteile von ZVI, nämlich Inaktivität als Adsorbens für hydrophobe Schadstoffe wie CKW und relativ kurze Lebensdauer, überwindet. Das Material soll insbesondere für eine In-situ-Behandlung von kontaminiertem Grundwasser anwendbar sein. Dafür sind eine sorptive Anreicherung der meist in hoher Verdünnung im zu reinigenden Wasser vorliegenden Schadstoffe und eine lange Lebensdauer der reaktiven Komponente, des Eisens, insbesondere der ZVI, im Grundwasserleiter, essentiell.

Überraschend konnte diese Aufgabe erfindungsgemäß durch die Bereitstellung eines Materials auf der Grundlage eines Basis-Kompositmaterials von Kohlenstoff als Adsorbens und Eisen in nanopartikulärer Form als Reduktionsmittel, das mit schwefelhaltigen und phosphorhaltigen Zusätzen behandelt wurde, gelöst werden.

Gegenstand der Erfindung ist daher ein korrosionsstabiles reaktives Adsorbens, welches einen Kohlenstoffträger, nullwertiges Eisen in nanopartikulärer Form auf dem Kohlenstoffträger, Schwefel und Phosphor aufweist, sowie Verfahren zu seiner Herstellung und seine Verwendung.

Bevorzugt weist das reaktive Adsorbens 10 bis 40 Ma% nullwertiges Eisen in nanopartikulärer Form, 40 bis 70 Ma% Kohlenstoff, 0,01 bis 5 Ma% P und 0,01 bis 5 Ma% S auf, besonders bevorzugt 0,1 bis 2 Ma% P und 0,1 bis 2 Ma% S. Ein typisches Material enthält 25-30% Fe in nanopartikulärer Form, 60-65% C und geringe Mengen an P und S (0,1 bis 1%).

Zur Herstellung des reaktives Adsorbens zur Behandlung von kontaminierten Wässern wird nullwertiges Eisen in nanopartikulärer Form (das heißt in fein verteilter Form) auf einem Kohlenstoffträger erzeugt und durch eine kombinierte Behandlung mit Phosphor- und Schwefelverbindungen in wässriger Suspension in eine reaktive und gleichzeitig korrosionsstabile Form gebracht.

Durch Hinzunahme von Phosphorverbindungen als Stabilisatoren zu einem Material aus elementarem Eisen (ZVI) und Kohlenstoff, das mit schwefelhaltigen Verbindungen behandelt worden ist, verbindet das erfindungsgemäße reaktive Adsorbens die Reduktionskraft von ZVI mit den positiven Effekten von S-dotiertem und C-basiertem Trägermaterial, unter Vermeidung der bekannten negativen Auswirkungen. Dafür wird ein Basis-Kompositmaterial aus ZVI, vorzugsweise NZVI, und einem porösen, nicht graphitierten, elektrisch wenig leitfähigen, Kohlenstoff-basierten Trägermaterial hergestellt, welches auf geeignete Weise mit Schwefel- und Phosphorverbindungen behandelt wird. Bevorzugt fungiert Aktivkohle als Trägermaterial.

Überraschend wurde gefunden, dass dieses reaktive Adsorbens sowohl eine sehr geringe Korrosionsgeschwindigkeit als auch eine hohe Dechlorierungsaktivität aufweist. Das steht im Gegensatz zu den Veröffentlichungen von Lowry et al. (2007, 2010), die eine Inhibierung der Dechlorierung von CKW nach Phosphatbehandlung von NZVI-Material beschrieben.

Phänomenologisch kann man die Eigenschaften des erfindungsgemäßen reaktiven Adsorbens so beschreiben, dass die Oberfläche der Eisen-Partikel auf dem Kohlenstoff-Täger durch eine Fe-S-P-Hülle gegen Korrosion geschützt wird, die Reduktionskraft des Eisens aber durch den direkten Kontakt mit dem Trägermaterial auf dieses übertragen wird. Das Trägermaterial, vorzugsweise Aktivkohle, besitzt eine sehr hohe Sorptionsaffinität und - kapazität für hydrophobe Schadstoffe, insbesondere für CKW, wodurch der zu eliminierende Schadstoff auf seiner Oberfläche angereichert wird. Diese adsorptive Anreicherung erhöht die Gesamtreaktionsgeschwindigkeit. Der genaue Transfermechanismus zwischen modifiziertem ZVI und Trägermaterial ist nicht bekannt. Wesentlich ist jedoch der Umstand, dass die Wasserstoffüberspannung an amorphem Kohlenstoff höher ist als an Eisenoberflächen, wodurch die Wasserzersetzung/Eisenkorrosion am Material wirksam inhibiert werden. Wesentlich für die Gebrauchseigenschaften des neuen reaktiven adsorbierenden Materials ist ferner die drastische Erhöhung der Verweildauer des Schadstoffs am/im Reagenz durch sorptive Bindung am C-Träger. Dadurch kann eine teilweise Verringerung der spezifischen Reaktivität des oberflächenmodifizierten ZVI zu Gunsten seiner Langzeitstabilität ohne signifikante Nachteile für die Gesamtperformance in Kauf genommen werden.

Das Verfahren zur Herstellung des erfindungsgemäßen reaktiven Adsorbens ist dadurch gekennzeichnet, dass ein Basis-Kompositmaterial aus nullwertigem Eisen in nanopartikulärer Form auf einem Kohlenstoffträger erzeugt wird, welches anschließend einer kombinierten Behandlung mit Phosphor- und Schwefelverbindungen unterzogen wird.

Zur Erzeugung des Basis-Kompositmaterials aus Kohlenstoff und ZVI, vorzugsweise NZVI, wird ein beliebiger Kohlenstoffträger, vorzugsweise Aktivkohle, besonders bevorzugt Pulveraktivkohle (PAK) mit einer Partikelgröße von 0,5 bis 50 µm, mit einer EisenVerbindung, vorzugsweise einer Eisen(III)-Verbindung, in der Regel durch Nassimprägnierung beladen und getrocknet. Daran schließt sich eine thermische Behandlung an, bevorzugt im Stickstoffstrom oder im Stickstoff- und im Wasserstoffstrom. Die thermische Behandlung kann bis zu Temperaturen von 800 °C durchgeführt werden. Wird die thermische Behandlung ausschließlich im Stickstoffstrom durchgeführt, so werden bevorzugt Temperaturen bis zu 750 °C gewählt. Bei Durchführung im kombinierten Stickstoffstrom und sich anschließendem Wasserstoffstrom werden Temperaturen bis zu 550 °C gewählt. Dabei erfolgt sie bevorzugt stufenweise, nach der Behandlung im Stickstoffstrom bis 350 °C erfolgt die Behandlung im Wasserstoffstrom bis 550 °C (Bleyl et al. in Chemical Engineering Journal, 2012).

Anschließend wird das Basis-Kompositmaterial in eine sauerstofffreie, wässrige Suspension überführt und dort mit gelösten Phosphorverbindungen und gelösten Schwefelverbindungen gleichzeitig oder nacheinander behandelt. Die wässrige Suspension des Basis-Kompositmaterials kann z.B. durch Zugabe von entionisiertem Wasser hergestellt werden, so dass in einem ersten Schritt ein annähernd neutrales Milieu, bevorzugt ein pH-Wertebereich von 5,5 bis 8 eingestellt wird, besonders bevorzugt ein Bereich von 6,5 bis 7,5.

Im zweiten Schritt werden Phosphorverbindung (vorzugsweise im Masseverhältnis P zu Feststoff von 0,1 bis 5 Ma-%) und Schwefelverbindung (vorzugsweise im Masseverhältnis S zu Feststoff von 0,1 bis 5 Ma-%) zugegeben. Dabei ist die Reihenfolge der Zugabe von Phosphor- und Schwefelverbindungen unerheblich, denn es entstehen Mischverbindungen, die im Wesentlichen aus (P-gestörten) Eisen-Schwefelverbindungen bestehen (also Eisensulfide mit P-Störstellen). So kann der Suspension zuerst die Phosphorverbindung zugesetzt werden und nach einer Einwirkzeit von vorzugsweise mindestens 10 Minuten wird die Schwefelverbindung zugesetzt oder umgekehrt. Mit der Zugabe an Phosphor- und Schwefelverbindungen verschiebt sich der pH-Wert in den alkalischen Bereich (je nach Einwirkzeit, bevorzugt bei 10 min bis 3 Std. bis pH 10). Danach wird der Feststoff abgetrennt und durch mehrmaliges Waschen, bevorzugt mit entionisiertem Wasser, von Resten der gelösten Phosphor- und Schwefelverbindungen befreit. Bevorzugt wird ein pH-Wert von 8 bis 10 eingehalten.

Als Phosphorverbindungen können z.B. Orthophosphate, Polyphosphate, Pyrophosphate oder Metaphosphate verwendet werden, vorzugsweise Dinatriumhydrogenphosphat. Als Schwefelverbindungen können wasserlösliche Sulfide, Dithionite oder Dithionate verwendet werden, vorzugsweise Natriumsulfid.

Die Funktion der Schwefel- und Phosphorzusätze im erzeugten reaktiven Adsorbens besteht in einer Passivierung der ZVI-Oberfläche gegen unerwünschte Eisenkorrosion in wässrigem Milieu. Es ist bekannt, dass sulfidischer Schwefel zur Bildung von Eisensulfid und bei hohen Konzentrationen an Schwefel zur Bildung von Pyrit an der ZVI-Oberfläche führt. Allerdings ist die Langzeitbeständigkeit dieser Schichten, die ausschließlich durch Schwefelgaben entstehen, begrenzt (Hanssen et al., 2008). Es wurde hier überraschend gefunden, dass die Langzeitstabilität des ZVI durch die Kombination von Schwefel- und Phosphorzusätzen signifikant verbessert wird.

Mit dem erfindungsgemäßen reaktiven Adsorbens werden die beiden Nachteile von ZVI, die Inaktivität für hydrophobe Schadstoffe und die relativ kurze Lebensdauer überwunden. ZVI wird mit umweltfreundlichen Zusätzen kombiniert, was zur Stabilisierung des ZVI gegen Korrosion in wässrigem Milieu führt, ohne dass gleichzeitig Reaktivität für den Schadstoffabbau verloren geht. Die kombinierte Phosphor-Schwefel-Behandlung beeinflusst sowohl die Stabilität als auch die Reaktivität des ZVI-Kohlenstoff-Basis-Kompositmaterials positiv. Die gemeinsame Einwirkung von Phosphor- und Schwefelverbindungen führt zu einer langfristigen korrosionsstabilen und dennoch reaktiven Eisenoberfläche. Es wird über die Lebenszeit des Eisens ein korrosionsstabiles reaktives Adsorbens bereitgestellt. Über die Lebenszeit des Eisens entscheiden die Gegebenheiten des jeweiligen Standortes. Wenn sehr viel Schadstoff reagieren muss, ist auch das Eisen schneller verbraucht. An einem Standort kann die Wirkdauer des reaktiven Adsorbens 3 Monate betragen, an einem anderen Standort mehrere Jahre.

Das erfindungsgemäße reaktive Adsorbens kann also über einen langen Zeitraum hervorragend zur Behandlung von kontaminierten Wässern eingesetzt werden, insbesondere zur Dechlorierung von Chlorkohlenwasserstoffverbindungen in Grundwässern.

Details der Herstellung des erfindungsgemäßen reaktiven Adsorbens und seiner Anwendung werden in den folgenden Ausführungsbeispielen beschrieben.

### Ausführungsbeispiele

### Beispiel 1

### Herstellung eines Basis-Kompositmaterials

a) Es wird eine kommerzielle Pulveraktivkohle (PAK, Partikelgröße: 0,5 bis 50 µm) durch Nassimprägnierung aus wässriger Lösung mit Eisen(III)-Nitrat im Masseverhältnis PAK zu Fe von 3 zu 1 beladen. Die beladene und vorgetrocknete PAK wird dann durch stufenweise Erwärmung zunächst im Stickstoffstrom, dann im Wasserstoffstrom auf Temperaturen bis 550°C reduziert. Es laufen die folgenden chemischen Reaktionen ab: 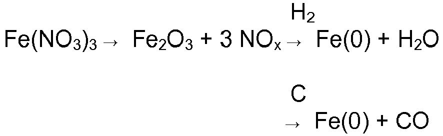
   Es entstand ein reaktives Adsorbens aus 25 Ma% Fe⁰ und 68 Ma% C und 7 Ma% Resten (bestehend überwiegend aus Eisenoxiden).
   Das so erhaltene, pyrophore Pulver, das Eisenpartikel in fein verteilter Form auf und in dem Kohlenstoffträger enthält, wird in mit Stickstoff gespültes Wasser überführt und auf unterschiedliche Weise weiter behandelt.
b) In Analogie zu a) Reduktion im Wasserstoffstrom wurde eine Reduktion im Stickstoffstrom bei Temperaturen bis 750°C vorgenommen, wobei in dieser Variante der Kohlenstoff des Trägermaterials PAK als Reduktionsmittel wirkt.

Es entstand ein reaktives Adsorbens aus 28 Ma% Fe⁰, 62 Ma% C und 10 Ma% Resten (bestehend überwiegend aus Eisenoxiden).

### c) Stabilitätsprüfung des Basis-Kompositmaterials

ZVI-C-Basis-Kompositmaterial (hergestellt nach Beispiel 1a) wurde bei annähernd neutralem pH-Wert in mit Stickstoff gespültem Leitungswasser unter leichtem Schütteln aufbewahrt (10 g/l). Dabei wurde die ZVI-Korrosion durch Messung des gebildeten Wasserstoffs kontinuierlich verfolgt. Nach 14 Tagen wurden das überstehende Wasser abdekantiert und der feuchte Rückstand mit konzentrierter Salzsäure versetzt. Dabei lösten sich alle Eisenverbindungen auf. Aus metallischem Eisen wurde Wasserstoff gebildet, gemäß Fe⁰ + 2 HCl → H₂ + FeCl₂. Das Volumen des Wasserstoffs wurde bestimmt und diente als Maß für das zum jeweiligen Zeitpunkt noch vorhandene ZVI. Nach 2 Wochen Lagerung in wässriger Suspension waren noch rund 75% des ursprünglichen ZVI-Gehaltes von 25 Ma% nachweisbar. Nach weiteren 4 Wochen waren es noch 50%, nach weiteren 2 Monaten noch 20%. Die Korrosionsgeschwindigkeit des ZVI kann mit einer Halbwertszeit (t_{50%_ZVI}) als Stabilitätsparameter beschrieben werden. Die Stabilität dieser Charge gegen anaerobe Korrosion ist mit einer t_{50%_ZVI} von rund 6 Wochen für einen gewünschten Wirkzeitraum von vielen Monaten bis Jahren nicht ausreichend.

Parallel zum Stabilitätstest wurde ein Reaktivitätstest mit dieser Charge (hergestellt nach Beispiel 1a) durchgeführt. Dafür wurde das ZVI-C-Basis-Kompositmaterial in einer Konzentration von 1 g/l in wässriger Suspension (entionisiertes Wasser) mit 10 mg/l Tetrachlorethen (PCE) versetzt und im verschlossenen Reaktionsgefäß kontinuierlich leicht geschüttelt. Die Konzentrationen an PCE und Chloridionen in der Lösung wurden durch gaschromatographische und ionenchromatographische Analysen bestimmt. Das PCE wurde schnell und nahezu vollständig durch Adsorption am Kompositmaterial aus der wässrigen Lösung entfernt. Danach lief eine Dechlorierungsreaktion ab, die durch Zunahme der Chloridkonzentration und dem Auftreten von gasförmigen chlorfreien Kohlenwasserstoffen, vor allem Ethen und Ethan als Produkte einer vollständigen Dechlorierung, verfolgt wurde. Die Dechlorierung folgt annähernd einer Kinetik erster Ordnung und soll an Hand des Parameters Halbwertszeit (t_{50%_PCE}, Reaktionszeit für einen 50%igen Umsatz des PCE) beschrieben werden. Die Halbwertszeit des PCE betrug unter den beschriebenen Reaktionsbedingungen t_{50%_PCE} ca. 12 d.

### Beispiel 2:

Herstellung eines mit Schwefel behandelten Basis-Kompositmaterials (Vergleichsbeispiel) ZVI-C-Basis-Kompositmaterial (hergestellt gemäß Beispiel 1 a) wurde in mit Stickstoff gespültes, entionisiertes Wasser überführt (10 g/l) und nach Zugabe von 100 mg/l Natriumsulfid (Na₂S-Nonahydrat) für 24 h moderat geschüttelt. Danach wurde der Feststoff durch Dekantieren abgetrennt und durch mehrmaliges Waschen mit entionisiertem, entgastem Wasser von restlichem gelösten Sulfid befreit.
Es entstand ein reaktives Adsorbens aus 24 Ma% Fe⁰, 68 Ma% C, ca. 0,15 Ma% S und Resten an Eisenoxiden.

Das mit Schwefel behandelte Material wurde in Leitungswasser suspendiert und, wie in Beispiel 1 c) beschrieben, auf Korrosionsstabilität und Dechlorierungsreaktivität getestet.
Zunächst wurde nur eine geringe Wasserstoffbildung durch Eisenkorrosion gemessen (4% des Maximalwertes nach 2 Wochen). Danach beschleunigte sich jedoch die Eisenkorrosion zunehmend und erreichte rund 90% des Maximalwertes nach insgesamt 10 Wochen. Für die Periode der beschleunigten ZVI-Korrosion betrug die Halbwertszeit t_{50%_ZVI} nur rund 1 Woche.

Im Unterschied zur anaeroben Korrosion wirkte sich die Schwefelbehandlung nicht signifikant auf die anfängliche Dechlorierungsaktivität des Kompositmaterials aus. PCE wurde von Anfang an mit einer Halbwertszeit t_{50%_PCE} von ca. 14 d dechloriert. Sein Abbau wurde jedoch in der Phase beschleunigter ZVI-Korrosion noch weiter beschleunigt (t_{50%_PCE} ca. 5 d).

Wie oben gezeigt, bewirkt eine reine Schwefelbehandlung nur eine vorübergehende Stabilisierung des Basis-Kompositmaterials. Danach tritt eine beschleunigte ZVI-Korrosion auf, die zu einer unbefriedigenden Gesamtlebensdauer des Materials führt.

### Beispiel 3:

Herstellung eines mit Phosphor behandeltem Basis-Kompositmaterials (Vergleichsbeispiel) ZVI-C-Basis-Kompositmaterial (hergestellt gemäß Beispiel 1 a) wurde wie in Beispiel 2 beschrieben in mit Stickstoff gespültes, entionisiertes Wasser überführt (10 g/l) und nach Zugabe von 200 mg/l Dinatriumhydrogenphosphat für 24 h moderat geschüttelt. Der pH-Wert verschiebt sich leicht ins Basische (bis pH 8,5). Danach wurde der Feststoff durch Dekantieren abgetrennt und durch mehrmaliges Waschen mit entionisiertem, entgastem Wasser von restlichem gelösten Phosphat befreit.
Es entstand ein reaktives Adsorbens aus 25 Ma% Fe⁰, 68 Ma% C, ca. 0,2 Ma% P und Resten an Eisenoxiden.

Das mit Phosphor behandelte ZVI-C-Basis-Kompositmaterial wurde in Leitungswasser suspendiert und, wie in den Beispielen 1 c) und 2 beschrieben, auf Korrosionsstabilität und Dechlorierungsreaktivität getestet.

Die ZVI-Korrosion wurde durch die Phosphatbehandlung nicht signifikant verringert. Es wurde eine Halbwertszeit t_{50%_ZVI} von etwa 5 bis 6 Wochen gemessen. Die Dechlorierungsaktivität verringerte sich leicht auf rund 70% im Vergleich zum unbehandelten Material (t_{50%_PCE} = 17 d).

Wie oben gezeigt, hat eine reine Phosphatbehandlung keinen positiven Einfluss auf Stabilität und Reaktivität des ZVI-C-Kompositmaterials.

### Beispiel 4:

### Herstellung eines erfindungsgemäßen reaktiven Adsorbens durch Behandlung des Basis-Kompositmaterials mit einer Phosphor- und einer Schwefelverbindung

ZVI-C-Basis-Kompositmaterial (hergestellt gemäß Beispiel 1a) wurde, wie in den Beispielen 2 und 3 beschrieben, in mit Stickstoff gespültes, entionisiertes Wasser überführt (10 g/l) und nach Zugabe von 200 mg/l Dinatriumhydrogenphosphat und kurz darauf 100 mg/l Natriumsulfid für 24 h moderat geschüttelt. Der pH-Wert verschiebt sich leicht ins Basische (bis pH 9). Danach wurde der Feststoff durch Dekantieren abgetrennt und durch mehrmaliges Waschen mit entionisiertem, entgastem Wasser von restlichem gelösten Phosphat und Sulfid befreit.
Es entstand ein reaktives Adsorbens aus 24 Ma% Fe⁰, 68 Ma% C, ca. 0,2 Ma% P, ca. 0,15 Ma% S und Resten an Eisenoxiden.

Das mit Phosphor und Schwefel behandelte ZVI-C-Basis-Kompositmaterial wurde in Leitungswasser suspendiert und, wie in den Beispielen 1 c), 2 und 3 beschrieben, auf Korrosionsstabilität und Dechlorierungsreaktivität getestet.

### Ergebnis

Die ZVI-Korrosion wurde durch die kombinierte Phosphat-Sulfid-Behandlung stark verringert. Nach 6 Monaten Reaktionszeit in Suspension mit Leitungswasser betrug der ZVI-Restgehalt noch 60% des Startwertes. Dies entspricht einer Halbwertszeit t_{50%_ZVI} von rund 7 Monaten. Es wurde keine Phase beschleunigter Korrosion, wie in Beispiel 2 für das S-modifizierte Kompositmaterial beschrieben, beobachtet.

Die Dechlorierungsaktivität des erfindungsgemäßen reaktiven Adsorbens wurde nicht negativ durch die kombinierte S-P-Vorbehandlung beeinflusst. PCE wurde mit einer Halbwertszeit t_{50%_PCE} = 10 d dechloriert. Die anhaltend hohe Dechlorierungsaktivität konnte durch wiederholte Zugaben an PCE über den gesamten Beobachtungszeitraum von 6 Monaten nachgewiesen werden.

### Beispiel 5

ZVI-C-Basis-Kompositmaterial (hergestellt gemäß Beispiel 1 b) wurde sowohl ohne (analog Beispiel 1c) als auch mit Phosphor- und Schwefelzusatz in Analogie zu Beispiel 4 jedoch mit Variation der Reihenfolge der Zugabe an Phosphor- und Schwefelverbindung untersucht:
a) Analog Beispiel 1c wurden 10 g/l ZVI-C-Basis-Kompositmaterial aus Beispiel 1 b in entionisiertes Wasser bei annähernd neutralem pH-Wert gegeben und seine Korrosionsstabilität untersucht und einem Reaktionstest mit PCE unterworfen. Ganz analog zum ZVI-C-Basis-Kompositmaterial aus Beispiel 1a findet man für das nach Beispiel 1b hergestellte ZVI-C-Basis-Kompositmaterial eine Korrosionsneigung mit einer Halbwertszeit des Eisens von t_{50%_ZVI} von etwa 6,5 Wochen. Die Dechlorierung des PCE erfolgte ebenfalls mit einer Kinetik erster Ordnung und einer Halbwertszeit von t_{50%_PCE} von 12 Tagen. Damit zeigt sich, dass beide in Beispiel 1 dargestellten ZVI-C-Basis-Kompositmaterialien eine vergleichbare Ausgangsreaktivität aufweisen.
b) Analog Beispiel 4 wurde das ZVI-C-Basis-Kompositmaterial (hergestellt nach Beispiel 1b bei 750 °C im Stickstoffstrom) mit Phosphor- und Schwefel-Verbindungen stabilisiert. Dazu wurde die in Beispiel 4 beschriebene Vorgehensweise gewählt, aber zu den 10 g/l reaktivem Adsorbens zuerst die 100 mg/l Natriumsulfid und im Abstand von 10 Minuten 200 mg/l Dinatriumhydrogenphosphat zugegeben und 24 Stunden lang moderat geschüttelt. Nach Dekantieren des Feststoffs und mehrmaligem Waschen mit entionisiertem, entgastem Wasser wurden für das reaktive Adsorbens 26 Ma% Fe⁰, 63 Ma% C, ca. 0,2 Ma% P, ca. 0,15 Ma% S und Reste an Eisenoxiden gefunden.
   Das Material wurde Korrosions- und Dechlorierungstests unterzogen, die analog zu Beispiel 4 zeigen, dass die kombinierte Gabe von Phosphor- und Schwefelzusatz einen deutlichen positiven Effekt auf die Langzeitstabilität bei erhaltener Dechlorierungsaktivität auf das reaktive Adsorbens hat. Die Korrosion wurde stark zurückgedrängt. Im Leitungswasser betrug die Halbwertszeit des Eisens t_{50%_ZVI} etwas mehr als 6 Monate (Restgehalt an Fe⁰ betrug noch 53% des Ausgangswertes). Die Dechlorierungsaktivität gegenüber PCE war sogar etwas höher als im Beispiel 4 gefunden. Die Halbwertszeit für die erste PCE-Zugabe t_{50%_PCE} wurde mit 8,5 Tagen ermittelt. Für die weiteren zwei durchgeführten PCE-Zugaben betrug die Halbwertszeit des Schadstoffs jeweils 9,5 Tage.

Die Ergebnisse für die Beispiele 4 und 5b kann man als analog einschätzen. In beiden Experimenten erkennt man den Vorteil der kombinierten Zugabe von Phosphor und Schwefel zum ZVI-C-Basis-Kompositmaterial. Es wurde jeweils gefunden, dass die Korrosionsneigung des Eisenmetalls stark herabgesetzt wurde, aber die Dechlorierung mit mindestens gleichbleibender Geschwindigkeit erfolgte. Damit kann man die Eisenkomponente im Kompositmaterial wesentlich effektiver für die Zielreaktion (also die Dechlorierung) ausnutzen und erhöht die Lebensdauer des Reinigungsmaterials für die Wasserreinigung beträchtlich.

## Patentansprüche

1. Korrosionsstabiles reaktives Adsorbens, welches einen Kohlenstoffträger, nullwertiges Eisen in nanopartikulärer Form auf dem Kohlenstoffträger, Schwefel und zusätzlich Phosphor aufweist.

2. Reaktives Adsorbens nach Anspruch 1, **dadurch gekennzeichnet, dass** 10 bis 40 Ma% nullwertiges Eisen, 40 bis 70 Ma% Kohlenstoff, 0,01 bis 5 Ma% P und 0,01 bis 5 Ma% S enthalten sind.

3. Reaktives Adsorbens nach Anspruch 2, **dadurch gekennzeichnet, dass** 0,1 bis 2 Ma% P und 0,1 bis 2 Ma% S enthalten sind.

4. Verfahren zur Herstellung eines reaktiven Adsorbens gemäß einem der Ansprüche 1 bis 3, **dadurch gekennzeichnet, dass** ein Basis-Kompositmaterial aus nullwertigem Eisen in nanopartikulärer Form auf einem Kohlenstoffträger erzeugt und durch eine kombinierte Behandlung mit Phosphor- und Schwefelverbindungen in wässriger Suspension in eine reaktive und gleichzeitig korrosionsstabile Form gebracht wird.

5. Verfahren nach Anspruch 4, **dadurch gekennzeichnet, dass** zur Erzeugung des Basis-Kompositmaterials der Kohlenstoffträger mit einer Eisenverbindung durch Nassimprägnierung beladen wird und nach Trocknung anschließend durch thermische Behandlung eine Reduktion zum nullwertigen Eisen in nanopartikulärer Form erfolgt.

6. Verfahren nach Anspruch 5, **dadurch gekennzeichnet, dass** als Eisenverbindung zur Imprägnierung eine wasserlösliche Eisen(III)-Verbindung verwendet wird.

7. Verfahren nach Anspruch 5, **dadurch gekennzeichnet, dass** die thermische Behandlung carbothermisch im Stickstoffstrom bei Temperaturen bis zu 800°C oder im Wasserstoffstrom bis 600°C oder durch Kombination beider Reduktionsmethoden durchgeführt wird.

8. Verfahren nach einem der Ansprüche 4 bis 7, **dadurch gekennzeichnet, dass** das Basis-Kompositmaterial in eine sauerstofffreie, wässrige Suspension überführt wird und die Suspension anschließend mit gelösten Phosphorverbindungen und gelösten Schwefelverbindungen behandelt wird.

9. Verfahren nach einem der Ansprüche 4 bis 8, **dadurch gekennzeichnet, dass** als Phosphorverbindungen wasserlösliche Orthophosphate, Polyphosphate, Pyrophosphate oder Metaphosphate verwendet werden.

10. Verfahren nach einem der Ansprüche 4 bis 9, **dadurch gekennzeichnet, dass** als Schwefelverbindungen wasserlösliche Sulfide, Dithionite oder Dithionate verwendet werden.

11. Verfahren nach Anspruch 8, **dadurch gekennzeichnet, dass** die wässrige Suspension des Basis-Kompositmaterials aus nullwertigem Eisen auf einem Kohlenstoffträger auf ein neutrales Milieu eingestellt wird und das Milieu unter Zusatz der Phosphor- und Schwefelverbindungen anschließend in den alkalischen Bereich verschoben wird.

12. Verfahren nach einem der Ansprüche 4 bis 11, **dadurch gekennzeichnet, dass** als Kohlenstoffträger Aktivkohle verwendet wird.

13. Verfahren nach Anspruch 12, **dadurch gekennzeichnet, dass** als Kohlenstoffträger Pulveraktivkohle (PAK) mit einer Partikelgröße von 0,5 bis 50 µm verwendet wird.

14. Verwendung des korrosionsstabilen reaktiven Adsorbens nach einem der Ansprüche 1 bis 3 zur Behandlung von mit hydrophoben Schadstoffen kontaminierten Wässern.

15. Verwendung des korrosionsstabilen reaktiven Adsorbens gemäß Anspruch 14 zur Dechlorierung von Chlorkohlenwasserstoffverbindungen in Wasser.

## Claims

1. A corrosion-resistant reactive adsorbent which has a carbon support, zerovalent iron in nanoparticulate form on the carbon support, sulfur and additionally phosphorus.

2. The reactive adsorbent according to Claim 1, **characterized in that** 10 to 40 mass% zerovalent iron, 40 to 70 mass% carbon, 0.01 to 5 mass% P and 0.01 to 5 mass% S are present.

3. The reactive adsorbent according to Claim 2, **characterized in that** 0.1 to 2 mass% P and 0.1 to 2 mass% S are present.

4. A method for producing the reactive adsorbent according to any one of Claims 1 to 3, **characterized in that** a base composite material is produced from zerovalent iron in nanoparticulate form on a carbon support and transformed into a reactive and simultaneously corrosion-resistant form by combined treatment with phosphorus and sulfur compounds in aqueous suspension.

5. The method according to Claim 4, **characterized in that** the base composite material is produced by the carbon support being loaded with an iron compound by wet impregnation and , after drying, reduction to zerovalent iron in nanoparticulate form then takes place by thermal treatment.

6. The method according to Claim 5, **characterized in that** a water-soluble iron(III) compound is used as the iron compound for impregnation.

7. The method according to Claim 5, **characterized in that** the thermal treatment is carried out carbothermally in a stream of nitrogen at temperatures of up to 800°C or in a stream of hydrogen at up to 600°C or by a combination of the two reduction methods.

8. The method according to any one of Claims 4 to 7, **characterized in that** the base composite material is transferred into an oxygen-free, aqueous suspension and the suspension is then treated with dissolved phosphorus compounds and dissolved sulfur compounds.

9. The method according to any one of Claims 4 to 8, **characterized in that** water-soluble orthophosphates, polyphosphates, pyrophosphates or metaphosphates are used as the phosphorus compounds.

10. The method according to any one of Claims 4 to 9, **characterized in that** water-soluble sulfides, dithionites or dithionates are used as the sulfur compounds.

11. The method according to Claim 8, **characterized in that** the aqueous suspension of the base composite material of zerovalent iron on a carbon support is adjusted to a neutral medium and the medium is then shifted into the alkaline range with the addition of the phosphorus and sulfur compounds.

12. The method according to any one of Claims 4 to 11, **characterized in that** activated carbon is used as the carbon support.

13. The method according to Claim 12, **characterized in that** powdered activated carbon (PAC) with a particle size of 0.5 to 50 µm is used as the carbon support.

14. Use of the corrosion-resistant reactive adsorbent according to any one of Claims 1 to 3 for treating waters contaminated with hydrophobic pollutants.

15. Use of the corrosion-resistant reactive adsorbent according to Claim 14 for dechlorinating chlorinated hydrocarbon compounds in water.

## Revendications

1. Adsorbant réactif résistant à la corrosion, lequel présente un support de carbone, du fer zérovalent sous forme nanoparticulaire sur le support de carbone, du soufre et en outre du phosphore.

2. Adsorbant réactif selon la revendication 1, **caractérisé en ce que** de 10 à 40 % massique de fer zérovalent, de 40 à 70 % massique, de carbone, de 0,01 à 5 % massique de P et de 0,01 à 5 % massique de S sont contenus.

3. Adsorbant réactif selon la revendication 2, **caractérisé en ce que** de 0,1 à 2 % massique de P et de 0,1 à 2 % massique de S sont contenus.

4. Procédé pour la fabrication d'un adsorbant réactif selon l'une quelconque des revendications 1 à 3, **caractérisé en ce qu'**un matériau composite de base en fer zérovalent sous forme nanoparticulaire est produit sur un support de carbone et est mis en forme réactive et simultanément résistante à la corrosion par un traitement combiné, à l'aide de composés phosphorés et soufrés en suspension aqueuse.

5. Procédé selon la revendication 4, **caractérisé en ce que** le support de carbone est chargé avec un composé de fer par imprégnation humide pour la production du matériau composite de base et **en ce qu'**une réduction en fer zérovalent sous forme nanoparticulaire est effectuée ensuite par traitement thermique, après séchage.

6. Procédé selon la revendication 5, **caractérisé en ce qu'**un composé de fer (III) soluble dans l'eau est employé comme composé de fer pour l'imprégnation.

7. Procédé selon la revendication 5, **caractérisé en ce que** le traitement thermique est effectué de façon carbothermique sous un courant d'azote par des températures jusqu'à 800 °C ou sous un courant d'hydrogène jusqu'à 600 °C ou par combinaison des deux méthodes de réduction.

8. Procédé selon l'une quelconque des revendications 4 à 7, **caractérisé en ce que** le matériau composite de base est mis en suspension aqueuse sans oxygène et **en ce que** la suspension est ensuite traitée avec des composés phosphorés en solution et des composés soufrés en solution.

9. Procédé selon l'une quelconque des revendications 4 à 8, **caractérisé en ce que** des orthophosphates, des polyphosphates, des pyrophosphates ou des métaphosphates solubles dans l'eau sont employés comme composés phosphorés.

10. Procédé selon l'une quelconque des revendications 4 à 9, **caractérisé en ce que** des sulfures, des dithionites ou des dithionates solubles dans l'eau sont employés comme composés soufrés.

11. Procédé selon la revendication 8, **caractérisé en ce que** la suspension aqueuse du matériau composite de base en fer zérovalent sur un support de carbone est ajustée à un milieu neutre et **en ce que** le milieu est ensuite déplacé vers la plage alcaline par ajout de composés phosphorés et soufrés.

12. Procédé selon l'une quelconque des revendications 4 à 11, **caractérisé en ce que** du charbon actif est employé comme support de carbone.

13. Procédé selon la revendication 12, **caractérisé en ce que** du charbon actif en poudre (CAP) avec une taille de particules de 0,5 à 50 µm est employé comme support de carbone.

14. Utilisation de l'adsorbant réactif résistant à la corrosion selon l'une quelconque des revendications 1 à 3 pour le traitement d'eaux contaminées par des substances nocives hydrophobes.

15. Utilisation de l'adsorbant réactif résistant à la corrosion selon la revendication 14 pour la déchloration de composés d'hydrocarbures chlorés dans l'eau.
